# EUROPÄISCHE PATENTANMELDUNG

(11) **EP 3 461 571 A1**
(43) Veröffentlichungstag der Anmeldung: **03.04.2019**
(21) Anmeldenummer: 17194340.0
(22) Anmeldetag: 02.10.2017
(51) Int. Cl.: B22F 3/105, B29C 64/153, B29C 64/386, B29C 64/393

(54) **VERFAHREN ZUM BESTRAHLEN EINER PULVERSCHICHT IN DER ADDITIVEN HERSTELLUNG MIT KONTINUIERLICH DEFINIERTEN HERSTELLUNGSPARAMETERN**

(71) Anmelder: Siemens Aktiengesellschaft, 80333 München (DE)
(72) Erfinder: Geisen, Ole, 10781 Berlin (DE)

(57) **Zusammenfassung**

Es wird ein Verfahren zum Bereitstellen von Daten für die selektive Bestrahlung einer Pulverschicht in der additiven Herstellung angegeben, das Verfahren umfassend das Bereitstellen einer vordefinierten Bauteilgeometrie für ein Bauteil (10), das Unterteilen der Bauteilgeometrie (10) in mindestens eine erste Bauteilschicht (S1) und eine darüber liegende zweite Bauteilschicht (S2) für die additive Herstellung, wobei eine Kontur (B) der zweiten Bauteilschicht (S2) deckungsverschieden von einer Kontur (A) der ersten Bauteilschicht (S1) ist, und das kontinuierliche Definieren mindestens eines Herstellungsparameters (HP) für eine additive Herstellung der zweiten Bauteilschicht (S2) im Bereich (X) eines Schmelzbades einer Kontur (A) der ersten Bauteilschicht (S1). Weiterhin wird ein entsprechendes Bauteil und Computerprogrammprodukt angegeben.

## Beschreibung

Die vorliegende Erfindung betrifft ein Verfahren für oder als Teil eines additiven Herstellungsverfahrens. Das Verfahren betrifft insbesondere das Bereitstellen von Daten oder Informationen für die selektive Bestrahlung einer Pulverschicht in der additiven Herstellung.

Die vorliegende Erfindung betrifft weiterhin ein entsprechendes additives Herstellungsverfahren sowie ein gemäß diesem Verfahren hergestelltes Bauteil. Weiterhin betrifft die vorliegende Erfindung ein Computerprogramm bzw. Computerprogrammprodukt und ein entsprechendes computerlesbares Medium.

Generative oder additive Verfahren zur Herstellung von Bauteilen umfassen beispielsweise als Pulverbettverfahren das selektive Laserschmelzen (SLM) oder Lasersintern (SLS), oder das Elektronenstrahlschmelzen (EBM).

Ebenso gehört das Laserauftragschweißen (LMD) zu den additiven Verfahren.

Ein Verfahren zum selektiven Laserschmelzen ist beispielsweise bekannt aus EP 2 601 006 B1.

Additive Fertigungsverfahren (englisch: "additive manufacturing") haben sich als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils direkt auf Basis einer entsprechenden CAD-Datei erfolgen kann.

Weiterhin ist die additive Fertigung bisher besonders vorteilhaft für die Entwicklung oder Herstellung von Prototypen, welche mittels konventioneller subtraktiver oder spanender Verfahren oder Gusstechnologie nicht oder nicht effizient hergestellt werden können.

Das Bauteil wie es vorliegend beschrieben ist, ist vorzugsweise für den Einsatz in einer Strömungsmaschine, vorzugsweise im Heißgaspfad einer Gasturbine vorgesehen. Das Bauteil besteht vorzugsweise aus einer Nickelbasis- oder Superlegierung, insbesondere einer nickel- oder kobaltbasierten Superlegierung oder umfasst eine solche Legierung. Die Legierung kann weiterhin vorzugsweise ausscheidungsgehärtet, oxidations- und/oder dispersionsgehärtet sein.

Die additive Herstellung erfordert das selektive Bestrahlen einer Pulverschicht mit vorzugsweise vordefinierten Bestrahlungs- oder Herstellungsparametern. Die entsprechenden Parameter müssen zumindest teilweise abhängig von der Geometrie des Bauteils gewählt werden. Abhängig davon, ob ein Randbereich bzw. eine Kontur des Bauteils oder für das Bauteil aktuell bestrahlt wird oder ein innenliegender Bereich, sind die Parameter hinsichtlich einer optimalen Materialstruktur - beispielsweise Oberflächengüte, Heißrissanfälligkeit - des Bauteils zu variieren. Dies ist insbesondere der Fall, da ein Wärmeeintrag in oder eine Wärmedissipation aus einem Schmelzbad heraus während der additiven Herstellung von der aktuellen (lateralen) Position oder des zu verfestigenden Bereichs oder der entsprechenden Schicht abhängig sind.

Zusätzlich müssen insbesondere diejenigen Herstellungsparameter, welche für die Herstellung oder Bestrahlung einer Kontur des Bauteils zu wählen sind, spezifisch dahingehend angepasst werden, ob die neue oder aktuell zu verfestigenden Bauteilschicht von einer darunterliegenden (aufgebauten oder hergestellten) Struktur gestützt wird oder beispielsweise über diese lateral hinausragt oder überhängt. Trotz einer gewissen "Design-Freiheit" beispielsweise von selektiven Schmelzverfahren, stellt das additive Herstellen von überhängen Strukturen der beschriebenen Bauteile bekanntlich eine große Herausforderung dar. Überhängende Bereiche des Bauteils, insbesondere solche mit einem Überhangwinkel von mehr als 45° sind mittels SLM oder EBM beispielsweise nur äußerst schwierig oder gar nicht herstellbar.

Insbesondere die Bauteilkontur einer aufgebauten und/oder zu verfestigenden Schicht für das Bauteil beinhaltet geometriebedingt oft sogenannte "Downskin-Bereiche" oder Überhänge, zusammen mit "Upskin"-Bereichen, welche von einer darunterliegenden Schicht gestützt sind. Eine Bauteilkontur in einem Upskin-Bereich weist vorzugsweise senkrechte Wände oder Konturen auf, welche beispielsweise parallel zur Aufbaurichtung des Bauteils verlaufen.

Je nachdem welche Kontur das Bauteil gemäß seiner Geometrie gerade aufweisen soll, werden dementsprechend unterschiedliche Herstellungs- oder Bestrahlungsparameter zugeordnet.

Die genannten Parameter charakterisieren vorliegend vorzugsweise sogenannte Vektoren für die Bestrahlung des Bauteils, oder eine Bestrahlung- oder Belichtungstrajektorie bzw. einen entsprechenden Pfad, gemäß dem ein Energiestrahl, beispielsweise einen Laserstrahl, über das Pulverbett geführt wird, um entsprechendes Ausgangspulver selektiv und entsprechend der gewünschten Geometrie des Bauteils zu verfestigen. Der Energiestrahl kann dabei mäanderförmig über das Pulverbett geführt werden, um eine möglichst große Fläche umzuschmelzen und zu verfestigen. Einzelne Bestrahlungsbahnen, welche zu dem Vektor gehören können, sind dabei vorzugsweise nur geringfügig voneinander beabstandet, sodass ein Schmelzbad die gesamte aufzuschmelzende Fläche des Pulverbettes erreicht, und ggf. so, dass eine benachbarte, bereits erstarrte Bahn oder Spur zumindest teilweise wiederaufgeschmolzen wird. Zusätzlich zu der Bestrahlung einer Bauteilschicht im Inneren sind, wie oben beschrieben, Konturbestrahlungen am Rand der jeweiligen Schicht erforderlich oder vorteilhaft.

Üblicherweise werden die unterschiedlichen Vektoren (beispielsweise "downskin" oder "upskin" mit eigenen Parametern versehen. Dies führt zu einer ungünstigen unterbrochenen, unstetigen oder diskontinuierlichen Konturbestrahlung und somit zu ineffizient langen Prozess- oder Aufbauzeiten und zusätzlich zu Instabilitäten im Schmelzbad während der Pulververfestigung, da beispielsweise bei jeder Unterbrechung oder Änderung im Bestrahlungspfad ein wiederholtes "Zünden", "Anfahren" und/oder Justieren der für die Verfestigung benötigten Bestrahlungsvorrichtung notwendig ist.

Es ist daher eine Aufgabe der vorliegenden Erfindung, Mittel anzugeben, welche die beschriebenen Schwierigkeiten oder Probleme lösen, insbesondere die Strukturqualität von additiv hergestellten Bauteilen entscheidend verbessern.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zum Bereitstellen von Daten bzw. Informationen für die selektive Bestrahlung einer Pulverschicht in der additiven Herstellung, umfassend das Bereitstellen einer vordefinierten Bauteilgeometrie, beispielsweise in Form einer CAD-Datei, für das Bauteil.

Das Verfahren umfasst weiterhin das Unterteilen der Bauteilgeometrie in mindestens eine erste Bauteilschicht und eine darüber liegende zweite Bauteilschicht für die additive Herstellung, wobei eine Kontur der zweiten Bauteilschicht deckungsverschieden oder inkongruent von einer Kontur der ersten Bauteilschicht ist. Mit anderen Worten gibt es mindestens einen "upskin" oder "downskin"-Bereich.

Das Verfahren umfasst weiterhin das kontinuierliche oder stetige Definieren mindestens eines Herstellungsparameters für eine additive Herstellung der zweite Bauteilschicht im Bereich eines Schmelzbades bzw. einer wärmebeeinflussten Zone beispielsweise einer Kontur der erste (darunterliegenden) Bauteilschicht. Mit anderen Worten wird der Parameter vorzugsweise kontinuierlich oder stetig in denjenigen Bereichen definiert, wo die Konturen (der erste und zweite Bauteilschicht) sich über die Breite des Schmelzbades schneiden.

Durch die beschriebene Erfindung wird vorteilhafterweise eine höhere Prozessproduktivität durch schnelleres Belichten der Kontur ohne Unterbrechungen ermöglicht. Weiterhin erlaubt das beschriebene Verfahren den Aufbau von Bauteilen mit einer geringeren Fehlstellen- oder Risszentrendichte. Da Ränder des Schmelzbades in der additiven Herstellung hinsichtlich ihrer Erstarrungs- oder Reaktionskinetik üblicherweise instabil sind, erlaubt die kontinuierliche Definition der Parameter eine entscheidende Verbesserung oder Begünstigung der Schmelzbadkinetik durch fließende Übergänge in der Konturbestrahlung und sämtlichen Herstellungsparametern. Somit wird das Risiko einer Riss- und/oder Defektbildung in der additiven Herstellung entscheidend vermindert. Dies bedeutet insbesondere in der additiven Herstellung von hochtemperaturbelasteten Komponenten, beispielsweise von Gasturbinen, bahnbrechende Vorteile.

Weiterhin wird mit dem beschriebenen Mitteln die Oberflächenqualität der Bauteile, auch umfassend innenliegende Oberflächen, entscheidend verbessert.

Es wird mit anderen Worten ein Potenzial geschaffen, die additive Herstellung reproduzierbar und/oder überhaupt anwendbar für die Serienfertigung von hochtemperaturbelasteten Komponenten zu machen.

Ein weiterer Aspekt der vorliegenden Erfindung betrifft ein Verfahren zum additiven Herstellen des Bauteils aus einem Pulverbett, umfassend das selektive Bestrahlen gemäß dem oben beschriebenen Verfahren, wobei das Bauteil gemäß der kontinuierlich definierten Herstellungsparameter mit einem Energiestrahl - vorzugsweise einem Laser- oder Elektronenstrahl bestrahlt und/oder additiv hergestellt wird.

Ein weiterer Aspekt der vorliegenden Erfindung betrifft ein Bauteil, welches gemäß dem beschriebenen Herstellungsverfahren herstellbar oder hergestellt ist, umfassend, im Vergleich zu einem konventionellen Bauteil (des Standes der Technik) eine geringere Dichte von Fehlstellen, Risszentren und/oder eine geringere Wahrscheinlichkeit zur Ausbildung von Fehlstellen oder Heißrissen. Dadurch kann das Bauteil vorteilhafterweise reproduzierbarer und mit einer verbesserten Struktur und Maßhaltigkeit hergestellt werden.

Ein weiterer Aspekt der vorliegenden Erfindung betrifft ein Computerprogramm bzw. Computerprogrammprodukt umfassend Befehle, die bei der Ausführung des Programms durch eine Datenverarbeitungseinrichtung (Computer) diese veranlassen, das Verfahren zum Bereitstellen von Daten für die selektive Bestrahlung auszuführen.

Ein weiterer Aspekt der vorliegenden Erfindung betrifft ein Computerprogrammprodukt, umfassend die Daten für die selektive Bestrahlung der Pulverschicht, welche durch das Verfahren zum Bereitstellen der entsprechenden Daten oder Informationen für die selektive Bestrahlung bereitgestellt werden bzw. aus dem beschriebenen Computerprogramm hervorgehen.

Ein weiterer Aspekt der vorliegenden Erfindung betrifft ein computerlesbares Medium oder Speichermedium, umfassend Befehle, die bei der Ausführung durch eine Datenverarbeitungseinrichtung diese veranlassen, das Verfahren zum Bereitstellen von Daten für die selektive Bestrahlung auszuführen. Das beschriebene Computerprogramm kann auf dem computerlesbaren Medium gespeichert sein.

In einer Ausgestaltung bezeichnet oder umfasst der Herstellungsparameter eine Geometrie eines Konturbestrahlungsmusters für die additive Herstellung des Bauteils. Gemäß dieser Ausgestaltung kann das Schmelzbad, welches bei der selektiven Bestrahlung des Pulverbettes zur Verfestigung eines Ausgangsmaterials - beispielsweise durch selektives Laserschmelzen - generiert wird mit Vorteil stabil und kontinuierlich über das Pulverbett geführt werden. Als Vorteil wird es Schmelzbad nicht abrupt abgebrochen, wodurch die beschriebenen Instabilitäten verhindert werden können.

In einer Ausgestaltung bezeichnet oder umfasst der Herstellungsparameter einen Konturherstellungsparameter.

In einer Ausgestaltung bezeichnet oder umfasst der Herstellungsparameter mindestens einen Bestrahlungsparameter oder eine Strahleigenschaft für die additive Herstellung des Bauteils, beispielsweise einen Parameter ausgewählt aus: Strahlungsintensität, Energiedichte, Strahlungsleistung, Strahlungsleistungsdichte, Polarisation, Pulsung und Bestrahlungswellenlänge. Bei der Bestrahlungswellenlänge kann es sich um eine Laserwellenlänge oder - im Falle eines Teilchenstrahls - um eine De-Broglie-Wellenlänge handeln. Gemäß dieser Ausgestaltung kann zusätzlich zu den beschriebenen Vorteilen der vorhergehenden Ausgestaltung der gesamte additiven Aufbauprozess anhand der Bestrahlungsparameter kontinuierlich, d.h. beispielsweise ohne Unstetigkeiten in oder Diskontinuitäten, durchgeführt werden.

In einer Ausgestaltung bezeichnet oder umfasst der Herstellungsparameter einen Konturbestrahlungsparameter.

In einer Ausgestaltung umfasst das kontinuierliche Definieren eine Vielzahl von Herstellungsparametern, umfassend zumindest einen Parameter gewählt aus: Wärmeeintrag, Schmelzbadbreite, Strahlversatz, Bestrahlungsgeschwindigkeit, Größe eines Strahlquerschnitts auf dem Pulverbett, Bestrahlungswinkel, Flussrate- bzw. Flussgeschwindigkeit einer Schutzgasströmung, Zustände von die Schutzgasströmung regelnden Gasventilen, Umgebungsdruck und Legierungszusammensetzung eines Pulvers. Gemäß dieser Ausgestaltung können besonders vorteilhaft sämtliche für den additiven Aufbau des Bauteils zu wählende oder wählbare Parameter kontinuierlich definiert oder angepasst werden. Die Anzahl der Parameter kann leicht 100 übertreffen.

In einer Ausgestaltung weist die zweite Bauteilschicht einen über die erste Bauteilschicht überhängenden oder hinausragenden Bereich auf.

In einer Ausgestaltung werden dem überhängenden Bereich, beispielsweise von einem Standardherstellungsparametersatz (beispielsweise für 90° Konturen oder 90° Wände) abweichende, Überhangherstellungsparameter zugeordnet.

In einer Ausgestaltung weist die zweite Bauteilschicht einen gestützten Bereich auf, welcher innerhalb der Kontur der erste Bauteilschicht liegt und beispielsweise von dieser beabstandet ist.

In einer Ausgestaltung werden dem gestützten Bereich, beispielsweise von dem Standardherstellungsparametersatz abweichende, Stützungsherstellungsparameter zugeordnet.

In einer Ausgestaltung wird die Bauteilgeometrie in eine Vielzahl von übereinander angeordneten Bauteilschichten unterteilt, beispielsweise in eine Anzahl zwischen 1000 und 10000 Bauteilschichten.

In einer Ausgestaltung werden Herstellungsparameter von zumindest einigen dieser Bauteilschichten im Bereich eines Schmelzbades oder einer wärmebeeinflussten Zone einer Kontur einer jeweils darunterliegenden Bauteilschicht kontinuierlich definiert.

In einer Ausgestaltung ist oder umfasst das Verfahren ein CAM Verfahren zur Vorbereitung der additiven Herstellung des Bauteils.

Ausgestaltungen, Merkmale und/oder Vorteile, die sich vorliegend auf das Verfahren zum Bereitstellen von Daten für die selektive Bestrahlung beziehen, können ferner das additive Herstellungsverfahren, das Bauteil, das Computerprogramm[produkt] oder das computerlesbare Medium betreffen und umgekehrt.

Weitere Einzelheiten der Erfindung werden nachfolgend anhand der Figuren beschrieben.
- Figur 1: zeigt eine schematische Schnittansicht eines Teils eines Bauteils während seiner additiven Herstellung.
- Figur 2: zeigt eine schematische Aufsicht auf zumindest einen Teil eines Bauteils, anhand der die selektive Bestrahlung für die additive Herstellung des Bauteils angedeutet wird.
- Figur 3: zeigt eine Detailansicht eines Bereichs der Aufsicht aus Figur 2.
- Figur 4: zeigt eine zur Figur 2 analoge schematische Aufsicht, anhand derer erfindungsgemäße Verfahrensschritte angedeutet werden.
- Figur 5: zeigt ein schematisches Flussdiagramm, welches erfindungsgemäß Verfahrensschritte andeutet.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

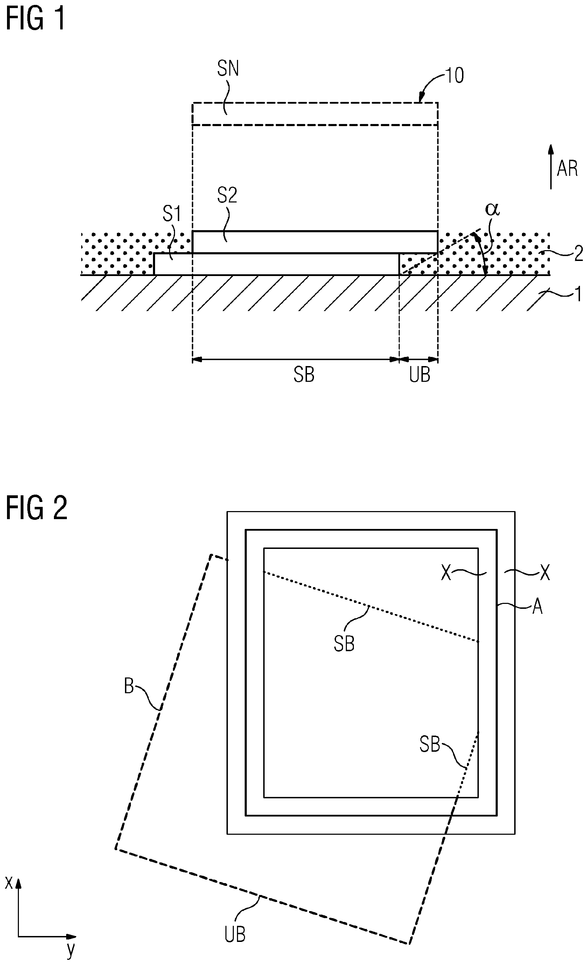

Figur 1 zeigt eine schematische Schnitt- bzw. Seitenansicht zumindest eines Teils eines additiv herzustellenden Bauteils 10. Das Bauteil 10 ist vorzugsweise während seiner additiven, generativen oder schichtweisen Herstellung angedeutet, wobei eine erste Schicht S1 sowie eine entlang einer Aufbaurichtung AR über der erste Schicht angeordneten zweite Schicht S2 bereits von einer Bestrahlungseinrichtung (nicht explizit gekennzeichnet) selektiv bestrahlt und demgemäß verfestigt und hergestellt wurde.

Die Verfestigung, beispielsweise durch einen Laser oder Elektronenstrahl (vergleiche SLM- und EBM-Verfahren) erfolgt vorzugsweise durch selektives Verfestigen eines Basismaterials aus einem Pulverbett 2. Die erste Schicht S1 wird dabei stoffschlüssig mit einem darunterliegenden Substrat oder einer Bauplattform 1 verbunden oder verschweißt. Dies geschieht, indem das Ausgangsmaterial oder das Pulverbett 2, beispielsweise reihen- oder mäanderförmig, mit dem Energiestrahl, beispielweise einem Laserstrahl gerastert wird. Dabei wird mit dem Strahl ein Schmelzbad über die Oberfläche des Pulverbettes geführt, welches nach dem Vorbeiführen des Lasers sofort zu einer neu aufgebauten Bauteilschicht erstarrt.

Das fertige Bauteil 10 umfasst vorzugsweise die Schichten S1, S2 und alle weiteren darauf aufzubauenden Schichten, bis hin zur Schicht SN (gestrichelt gekennzeichnet).

Das Bauteil ist vorzugsweise ein im Heißgaspfad einer Gasturbine angewendetes, hochtemperaturbelastbares Bauteil. Demgemäß sind bereits besondere Anforderungen an das das Pulverbett 2 bildende Ausgangsmaterial gestellt. Das Ausgangsmaterial bezeichnet vorzugsweise eine ausscheidungsgehärtete und besonders hochwarmfeste und - aufgrund seiner Rissanfälligkeit schwer schweißbaren - Superlegierung, beispielsweise einer Nickelbasislegierung. Das möglichst defektarme Aufschmelzen/Aufschweißen, welches für den additiven Aufbau erforderlich ist, stellt bereits bei einfachen Geometrieen aufgrund der im additiven Aufbauprozess beteiligten hohen Temperaturgradienten und komplizierten Reaktionskinetik eine besondere Herausforderung und eine der maßgeblichen Einschränkungen in der Etablierung von additiv hergestellten hochtemperaturbelastbaren Komponenten dar.

Eine weitere Schwierigkeit entsteht, wenn zusätzlich komplizierte Bauteilgeometrieen in der additiven Herstellung zu realisieren sind.

Die Schicht S1 ist vorzugsweise im Rahmen eines SLM- oder EBM-Prozesses mit einer weiteren Schicht von Pulver oder Ausgangsmaterial beschichtet worden, welches anschließend gemäß der Geometrie des Bauteils bestrahlt und in Form der Schicht S2 verfestigt wurde.

Die Geometrie des Bauteils 10 erfordert in dem vorliegenden Fall, dass die Schicht S2 am Rand des Bauteils 10 (nicht explizit gekennzeichnet) über die Schicht S1 seitlich in einem überhängenden Bereich oder Überhangbereich UB hinausragt.

Da ein Winkel α von weniger als 45° (vgl. Fig. 1) eines überhängenden Bereichs in der additiven Herstellung der beschriebenen Komponenten nicht oder nur äußerst schwierig realisierbar sind, ist der überhängende Bereich UB beispielweise im Vergleich zu einem gestützten oder stützenden Bereich SB, in welchem die Schicht S2 vollständig durch die Schicht S1 gestützt wird, klein oder schmal. Der überhängende Bereich UB ist am rechten Rand des Bauteils 10 in Figur 1 beispielsweise demgemäß mit unterschiedlichen Herstellungsparametern oder Bestrahlungsparameter aufzubauen bzw. zu bestrahlen, als der linke Rand des Bauteils, welcher vollständig von der Schicht S1 gestützt wird.

Figur 2 deutet in Aufsicht auf das in Figur 1 beschriebene Bauteil bzw. einer einzelnen Bauteilschicht ein Bestrahlungsmuster bzw. Konturbestrahlungsvektoren für den additiven Aufbau des Bauteils 10 an.

Die Linie A deutet eine Kontur der erste Schicht S1 an.

Die gestrichelte Linie B deutet hingegen eine Kontur der zweiten, über der ersten Schicht liegenden Schicht S2 an. Die zweite Schicht S2 ist also deckungsverschieden von der ersten Schicht S1 oder inkongruent zu dieser. In der Aufsicht der Figur 2 gibt es allerdings Bereiche, die sich überdecken, sodass die Schicht 2, angedeutet durch die Kontur B, gestützte als auch überhängende Bereiche beschreibt. Mit anderen Worten definiert die Kontur B relativ zu der Kontur A die Geometrie-änderung des Bauteils 10 entlang einer Aufbaurichtung AR (in Figur 2 betrachtet aus der Papierebene heraus).

In konstantem Abstand zu der Linie A ist mit ähnlichem Verlauf der Kontur A ein Bereiche X des Schmelzbades während der additiven Herstellung bzw. einer wärmebeeinflussten Zone die nicht unbedingt vollständig aufgeschmolzen werden muss, angedeutet. In dem Bereich X des Schmelzbades ist die Kontur oder Linie B unterbrochen gezeigt, was andeuten soll, dass in diesem Bereich X konventionell Unterbrechungen oder Unstetigkeiten in jeglichen Herstellungsparametern vorliegen. Dies hat negative Auswirkungen auf die Struktur des Bauteils 10.

In dem oben beschriebenen gestützten oder stützenden Bereich SB ist die Linie B gepunktet dargestellt, was andeuten soll, das in diesem Bereich die Schicht S2 vollständig von der Schicht S1 getragen wird.

Demgegenüber ist die Kontur B in einem überhängenden Bereich UB (der Schicht S2 relativ zur Schicht S1) gestrichelt gekennzeichnet.

Herstellungsparameter, beispielweise Bestrahlungsparameter, werden standardmäßig und abhängig davon, ob eine Überhangkontur (vgl. UB), eine Standardkontur oder Standardwand (nicht explizit gekennzeichnet) oder ein vollständig gestützter Bereich (vgl. SB) bestrahlt werden soll, unterschiedlich gewählt.

Der genannte Herstellungsparameter kann zusätzlich als Bestrahlungsparameter beispielsweise eine Strahlungsintensität, Energiedichte, Strahlungsleistung, Strahlungsleistungsdichte, Polarisation, Pulsung oder eine Bestrahlungswellenlänge betreffen. Demgemäß kann ein Betrag von einem der beschriebenen Parameter in dem überhängenden Bereich beispielsweise größer oder kleiner als der Betrag des gleichen Parameters in dem gestützten Bereich gewählt werden, um zu einer optimalen Struktur- oder Oberflächenqualität des Bauteils 10 zu gelangen. Die optimale Einstellung dieser oder weitere Parameter ist sehr sensibel, da beispielsweise eine zu groß oder zu klein gewählte Strahlungsleistung lokal bereits zu einer stark erhöhten Dichte von Fehlstellen, Porositäten oder Risszentren oder "Risskeimen" führen kann.

Alternativ oder zusätzlich zu den beschriebenen Größen kann ein Herstellungsparameter spezifische Parameter einer additiven Herstellungsanlage (nicht explizit gekennzeichnet) im allgemeinen bezeichnen, beispielsweise Wärmeeintrag, Schmelzbadbreite, Strahlversatz, Bestrahlungsgeschwindigkeit, Größe eines Strahlquerschnitts auf dem Pulverbett, Bestrahlungswinkel, Flussrate- bzw. Flussgeschwindigkeit einer Schutzgasströmung, Zustände von die Schutzgasströmung regelnden Gasventilen, Umgebungsdruck oder sogar eine Legierungszusammensetzung des Pulvers. Die Anzahl der Parameter, welche nötig ist um einen additiven Herstellungsprozess hinreichend umfassend bzw. reproduzierbar zu beschreiben kann leicht die Zahl von 100 übersteigen, wie anhand der oben beschriebenen Beispiele verdeutlicht wird. Jede dieser Größen kann vorliegend als Herstellungsparameter aufgefasst werden.

Die durchgezogenen Bereiche oder Abschnitte der Kontur B, d.h. in den Bereichen X, welche das Schmelzbad der darunterliegenden Schicht S1 beziehungsweise dessen Randkontur schneiden oder kreuzen, beschreiben folglich eine abrupte Stufe im Bestrahlungsmuster und damit auch in sämtlichen Herstellungsparametern.

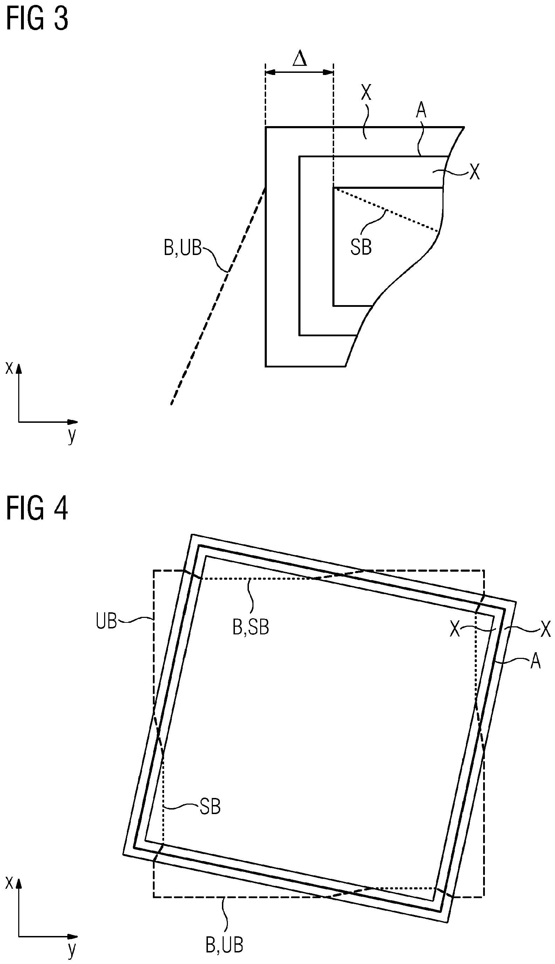

Figur 3 zeigt eine Detailansicht der Aufsicht aus Figur 2 (obere linke Ecke). Es ist zu erkennen, dass im Bereich des Schmelzbades bzw. der wärmebeeinflussten Zone, welches vorliegend eine Breite Δ von 500 µm oder weniger, beispielsweise 200 µm, hat, ein Sprung sowohl in der Kontur B (in Figur 2 durchgezogene dargestellt) und folglich selbstverständlich auch in den entsprechenden Bestrahlungs- und Herstellungsparametern auftritt.

Dieser Sprung führt zu ungünstigen Strukturergebnissen des Bauteils 10, insbesondere der Schicht S2, da weder die Kontur noch die über den Bereich X hinweg zu wählenden Herstellungs- oder Beschichtungsparameter kontinuierlich definiert sind.

Der genannte Sprung bzw. die Unstetigkeit in der Konturbestrahlung oder der sprechenden Herstellungsparameter tritt wie in Figur 3 angedeutet vorzugsweise in dem Bereich X der Schicht S1, also jenem Bereich auf, welcher für die Schicht S2 den überhängenden Bereich UB von dem stützenden Bereich SB trennt.

In Figur 4 ist eine Situation vergleichbar zu derjenigen aus Figur 2 gezeigt, wohingegen jedoch erfindungsgemäße Verfahrensschritte angewendet worden sind, um die beschriebene Unstetigkeit und die damit verbundenen Nachteile zu verhindern. In Figur 4 ist wieder die Kontur A mit dem sie umgebenden Bereich X eingezeichnet (im Vergleich zur Figur 2 leicht nach rechts verdreht). Die Kontur B ist ebenfalls in zumindest ähnlicher Weise wie in Figur 2 gestrichelt eingezeichnet. In dem überhängenden Bereich UB und dem stützenden oder gestützten Bereich SB verhält sich die Bestrahlung samt den entsprechenden Herstellungsparametern vorzugsweise so wie in Figur 2 oder im Stand der Technik bekannt. In den Bereichen X, in denen - wie anhand von Figur 3 ersichtlich - üblicherweise ein Sprung in der Konturbestrahlung auftritt, und damit auch eine Unstetigkeit in den Beträgen der Herstellungsparameter, ist nunmehr ein kontinuierlicher Übergang in der Kontur B gezeigt. Gemäß dem erfindungsgemäßen Verfahren wird jetzt also ein konkreter Bestrahlungsvektoren (Konturbestrahlung) in dem Bereich des Schmelzbades der Kontur einer darunterliegenden Schicht (vergleiche Schicht S1) definiert.

Zusätzlich können aufgrund der in diesem Bereich vorhandenen kontinuierlich definierten Bestrahlungsvektoren nicht nur Bestrahlungsvektoren, wie beispielsweise die Strahlungsleistungsdichte, Bestrahlungswellenlänge oder Laserleistung, sondern auch sämtliche oben beschriebenen Herstellungsparameter, beispielsweise graduell und stetig definiert oder angepasst werden, gemäß denen, das Bauteil 10 schließlich auch aufgebaut wird, um die erfindungsgemäßen Vorteile zu nutzen. Die (graduelle) Anpassung erfolgt vorzugsweise (aber nicht notwendigerweise) direkt an diejenigen Parameter der entsprechend darüber aufzubauenden Schicht (vergleiche Schicht S2), welche in dem überhängenden Bereich UB und dem stützenden Bereich SB gewählt sind.

Dies hat, im Gegensatz zu Sprüngen oder Unstetigkeiten in der Konturbestrahlung und den entsprechenden Herstellungsparametern für den additiven Prozess entscheidende Vorteile, wie beispielsweise eine höhere Produktivität durch schnelleres Belichten der Kontur ohne Unterbrechungen, weniger Fehlstellen oder Risszentren, da ein "Anfang" und "Ende" des Schmelzbades (vergleiche Bereich X) nicht mehr instabil sondern kontinuierlich und stabil geführt werden können. Folge sind weiterhin eine verbesserte Struktur, Oberflächenqualität und verbesserte Maßhaltigkeit für das Bauteil 10.

Wie anhand von Figur 1 angedeutet umfasst das erfindungsgemäße Verfahren für die additive Herstellung des Bauteils 10 die Unterteilung einer entsprechenden Bauteilgeometrie in eine Vielzahl von übereinander angeordneten Bauteilschichten S1, S2 bis hin zu SN. Dies kann einer Anzahl zwischen 1000 und 10000 Bauteilschichten entsprechen, wobei Herstellungsparameter HP von zumindest einigen dieser Bauteilschichten im Bereich X des Schmelzbades einer Kontur einer jeweils darunterliegenden Bauteilschicht S1 wie beschrieben kontinuierlich definiert werden.

Das fertig hergestellte Bauteil 10 umfasst im Vergleich zu einem Bauteil des Standes der Technik oder einem konventionell hergestellten Bauteil vorzugsweise eine geringere Dichte von Fehlstellen, Risszentren und/oder eine geringere Wahrscheinlichkeit zur Ausbildung von Fehlstellen oder Heißrissen.

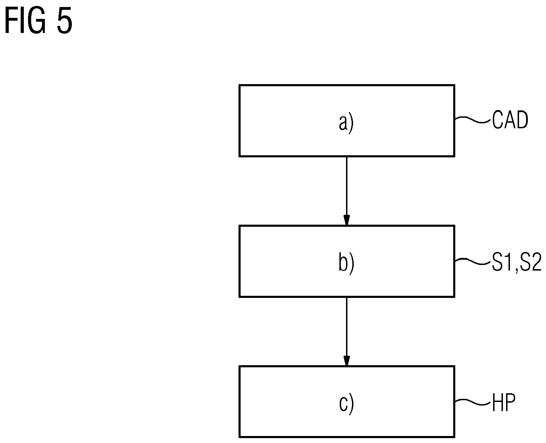

Figur 5 deutet anhand eines schematischen Flussdiagramms Verfahrensschritte des erfindungsgemäßen Verfahrens an:
Das Verfahren ist vorzugsweise ein Verfahren zum Bereitstellen von Daten für die selektive Bestrahlung einer Pulverschicht in der additiven Herstellung. In diesem Sinne beschreibt das erfindungsgemäße Verfahren vorzugsweise einen Teil eines additiven Herstellungsverfahrens selbst. Das Verfahren umfasst, a), das Bereitstellen einer vordefinierten Bauteilgeometrie für das Bauteil 10 (siehe Schichten S1, S2 bis hin zu SN in Figur 1). Die Bauteilgeometrie wird vorzugsweise durch eine CAD-Datei oder entsprechende Konstruktionsdaten vorgegeben. Alternativ dazu kann die Bauteilgeometrie durch eine digitalisierte Vermessung eines bereits bestehenden Bauteils 10 bereitgestellt werden.

Das Verfahren umfasst, b), weiterhin das Unterteilen der Bauteilgeometrie 10 in mindestens eine erste Bauteilschicht S1 und eine darüber liegende zweite Bauteilschicht S2 für die additive Herstellung, wobei eine Kontur B der zweiten Bauteilschicht S2 deckungsverschieden von einer Kontur A der ersten Bauteilschicht S1 ist (siehe oben). Das Unterteilen einschließlich der folgenden Verfahrensschritte ist vorzugsweise als Teil eines CAM-Verfahrens zur Vorbereitung der additiven Herstellung des Bauteils 10 anzusehen.

Das Verfahren umfasst weiterhin, c) das kontinuierliches Definieren mindestens eines Herstellungsparameters HP für eine additive Herstellung der zweiten Bauteilschicht S2 im Bereich X eines Schmelzbades der Kontur A der ersten Bauteilschicht S1 wie oben beschrieben.

Demgemäß können prinzipiell alle beschriebenen Verfahrensschritte, gegebenenfalls bis auf den physischen eigentlichen Aufbau des Bauteils selbst, durch Mittel zur Datenverarbeitung, beispielsweise eine Datenverarbeitungseinrichtung oder einen Computer durchgeführt werden.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

## Patentansprüche

1. Verfahren zum Bereitstellen von Daten für die selektive Bestrahlung einer Pulverschicht in der additiven Herstellung umfassend die folgenden Schritte:
- a) Bereitstellen einer vordefinierten Bauteilgeometrie für ein Bauteil (10),
- b) Unterteilen der Bauteilgeometrie (10) in mindestens eine erste Bauteilschicht (S1) und eine darüber liegende zweite Bauteilschicht (S2) für die additive Herstellung, wobei eine Kontur (B) der zweiten Bauteilschicht (S2) deckungsverschieden von einer Kontur (A) der ersten Bauteilschicht (S1) ist,
- c) kontinuierliches Definieren mindestens eines Herstellungsparameters (HP) für eine additive Herstellung der zweiten Bauteilschicht (S2) im Bereich (X) eines Schmelzbades einer Kontur (A) der ersten Bauteilschicht (S1).

2. Verfahren gemäß Anspruch 1, wobei der Herstellungsparameter (HP) eine Geometrie eines Konturbestrahlungsmusters für die additive Herstellung des Bauteils (10) bezeichnet.

3. Verfahren gemäß Anspruch 1 oder 2, wobei der Herstellungsparameter (HP) mindestens einen Bestrahlungsparameter für die additive Herstellung des Bauteils bezeichnet, beispielsweise einen Parameter gewählt aus: Strahlungsintensität, Energiedichte, Strahlungsleistung, Strahlungsleistungsdichte, Bestrahlungswellenlänge.

4. Verfahren gemäß einem der vorhergehenden Ansprüche, umfassend das kontinuierliche Definieren einer Vielzahl von Herstellungsparametern (HP), umfassend zumindest einen Parameter gewählt aus: Wärmeeintrag, Schmelzbadbreite, Strahlversatz, Bestrahlungsgeschwindigkeit, Größe eines Strahlquerschnitts auf dem Pulverbett, Bestrahlungswinkel, Flussrate- bzw. Flussgeschwindigkeit einer Schutzgasströmung, Zustände von die Schutzgasströmung regelnden Gasventilen, Umgebungsdruck, Legierungszusammensetzung eines Pulvers.

5. Verfahren gemäß einem der vorhergehenden Ansprüche, wobei die zweite Bauteilschicht (S2) einen über die erste Bauteilschicht überhängenden Bereich (UB) aufweist.

6. Verfahren gemäß Anspruch 5, wobei dem überhängenden Bereich (UB), beispielsweise von einem Standardherstellungsparametersatz abweichende, Überhangsherstellungsparameter (UP) zugeordnet werden.

7. Verfahren gemäß einem der vorhergehenden Ansprüche, wobei die zweite Bauteilschicht (S2) einen gestützten Bereich (SB) aufweist, welcher innerhalb der Kontur (A) der ersten Bauteilschicht (S1) liegt und von dieser beabstandet ist.

8. Verfahren gemäß Anspruch 7, wobei dem gestützten Bereich (SB), beispielsweise von einem Standardherstellungsparametersatz abweichende, Stützungsherstellungsparameter (SP) zugeordnet werden.

9. Verfahren gemäß einem der vorhergehenden Ansprüche, wobei die Bauteilgeometrie in eine Vielzahl von übereinander angeordneten Bauteilschichten (S1, S2, SN) unterteilt wird, beispielsweise in eine Anzahl zwischen 1000 und 10000 Bauteilschichten, und wobei Herstellungsparameter (HP) von zumindest einigen dieser Bauteilschichten im Bereich (X) eines Schmelzbades einer Kontur einer jeweils darunterliegenden Bauteilschicht (S1) kontinuierlich definiert werden.

10. Verfahren gemäß einem der vorhergehenden Ansprüche, welches ein CAM-Verfahrens zur Vorbereitung der additiven Herstellung des Bauteils (10) ist.

11. Verfahren zum additiven Herstellen eines Bauteils (10) aus einem Pulverbett (2), umfassend das selektive Bestrahlen gemäß dem Verfahren nach einem der vorhergehenden Ansprüche, wobei das Bauteil (10) gemäß der kontinuierlich definierten Herstellungsparameter (HP) mit einem Energiestrahl bestrahlt und additiv hergestellt wird.

12. Bauteil, welches gemäß dem Verfahren nach Anspruch 11 herstellbar oder hergestellt ist, umfassend, im Vergleich zu einem Bauteil des Standes der Technik, eine geringere Dichte von Fehlstellen, Risszentren und/oder eine geringere Wahrscheinlichkeit zur Ausbildung von Fehlstellen oder Heißrissen.

13. Computerprogramm, umfassend Befehle, die bei der Ausführung des Programms durch eine Datenverarbeitungseinrichtung diese veranlassen, das Verfahren nach einem der Ansprüche 1 bis 10 auszuführen.

14. Computerprogrammprodukt, umfassend die Daten für die selektive Bestrahlung der Pulverschicht, welche durch das Verfahren nach einem der Ansprüche 1 bis 10 bereitgestellt werden bzw. aus dem Computerprogramm gemäß Anspruch 13 hervorgehen.

15. Computerlesbares Medium, umfassend Befehle, die bei der Ausführung durch eine Datenverarbeitungseinrichtung diese veranlassen, das Verfahren gemäß einem der Ansprüche 1 bis 10 auszuführen.
